# EUROPEAN PATENT SPECIFICATION

(11) **EP 4 439 157 B1**
(45) Date of publication and mention of the grant of the patent: **30.09.2026**
(21) Application number: 23799548.5
(22) Date of filing: 08.03.2023
(51) Int. Cl.: G02B 30/25, G02B 30/23, G02B 5/30, G02B 27/28, H04N 13/302, G02B 27/01, G02B 30/26, G02B 30/52

(54) **DISPLAY DEVICE FOR PROVIDING IMMERSIVE IMAGE**
ANZEIGEVORRICHTUNG ZUR BEREITSTELLUNG EINES IMMERSIVEN BILDES
DISPOSITIF D'AFFICHAGE POUR FOURNIR UNE IMAGE IMMERSIVE

(30) Priority: 03.05.2022 KR 20220055019
(43) Date of publication of application: 02.10.2024
(73) Proprietor: Samsung Electronics Co., Ltd., Suwon-si, Gyeonggi-do 16677 (KR)
(72) Inventor: WON, Kwanghyun, Suwon-si, Gyeonggi-do 16677 (KR); LEE, Seunghyun, Suwon-si, Gyeonggi-do 16677 (KR)
(74) Representative: Appleyard Lees IP LLP
(86) International application number: PCT/KR2023/003169
(87) International publication number: WO 2023/214665

(56) References cited:
- WO-A1-2017/091538
- CN-A- 111 045 213
- KR-A- 20150 093 353
- KR-A- 20190 123 511
- KR-A- 20190 142 668
- KR-A- 20200 145 622
- US-A1- 2020 098 184
- US-A1- 2020 150 429
- US-A1- 2022 043 277

## Description

### TECHNICAL FIELD

The disclosure relates to an immersive display apparatus.

### BACKGROUND ART

Three-dimensional (3D) image display technology has been applied to various fields, and has recently been applied to imaging devices related to virtual reality (VR) and augmented reality (AR). Examples of the related art are shown in WO2017/091538A1.

VR devices may be implemented as wearable devices of a glasses type, a head mount type, a goggle type, etc., to express 3D images with binocular parallax stereoscopy technology or to enhance the immersion of users enjoying VR images.

Such a device may be accompanied by visual fatigue due to vergence-accommodation mismatch, and may be accompanied by discomfort when worn by a user for a long time.

### DESCRIPTION OF EMBODIMENTS

### TECHNICAL PROBLEM

Provided is an immersive display apparatus that may be implemented as a non-wearable type.

### SOLUTION TO PROBLEM

According to an aspect of the disclosure, a display apparatus includes an image forming device configured to provide image light, a polarization controller configured to adjust a polarization state of the image light provided from the image forming device, a processor configured to control the polarization controller, based on image information to be provided to a user, a polarization beam splitter provided in a first optical path where the image light travels, the polarization beam splitter configured to reflect light of a first polarization, and transmit light of a second polarization that is different from the first polarization, a first curved mirror provided in a second optical path of first image light among the image light reflected from the polarization beam splitter and configured to focus the first image light on a first virtual plane at a first depth position, and a second curved mirror provided in a third optical path of second image light among the image light passing through the polarization beam splitter and configured to focus the second image light on a second virtual plane at a second depth position.

The processor may be further configured to control the polarization controller to time-divisionally adjust the polarization state of the image light into the first polarization and the second polarization.

The polarization controller includes a plurality of cells configured to independently adjust a polarization of incident light.

The image information includes gradient depth map information in which a depth value in a range from a first depth value to a second depth value is allocated to each of a plurality of pixels of the image light, and the processor may be further configured to control the polarization controller such that light from each of the plurality of pixels of the image light enters a second polarization state having a ratio of a first polarization component to a second polarization component.

In a gradient depth map, the depth value of each of the plurality of pixels of the image light may be determined based on at least one of a luminance of a pixel, a color of a pixel, and a luminance difference from an adjacent pixel.

The display apparatus may include a polarizer provided between the image forming device and the polarization controller, where the polarizer may be configured to convert polarization of the image light provided from the image forming device into a linear polarization of a predetermined direction.

The display apparatus may include a 1/4-wavelength plate provided between the polarization beam splitter and the first curved mirror.

The display apparatus may include a 1/4-wavelength plate provided between the polarization beam splitter and the second curved mirror.

The first curved mirror may include an aspheric surface in a first shape, and the second curved mirror may include an aspheric surface in a second shape different from the first shape.

The first curved mirror and the second curved mirror may include a same curved shape, and the first curved mirror and the second curved mirror may be provided at different distances from the polarization beam splitter.

The display apparatus may include a non-wearable type of display apparatus.

According to an aspect of the disclosure, a display method includes outputting image light, the image light to be provided to a field of view of a user, adjusting, time-divisionally or space-divisionally, a polarization state of the image light, and, based on the polarization state of the image light, focusing the image light on at least one of a first virtual plane having a first depth position and a second virtual plane having a second depth position.

The method may include splitting a traveling path of the image light into two different directions based on the adjusted polarization state of the image light.

.

The adjusting the polarization state includes separately adjusting the polarization state of the image light in a unit of a pixel of the image light.

.

The polarization state of the image light is adjusted for each pixel corresponding to the image light, based on gradient depth map information, to a polarization state where a first polarization component and a second polarization component that is perpendicular to the first polarization component are included at a predetermined ratio.

### ADVANTAGEOUS EFFECTS OF DISCLOSURE

Provided is a display apparatus that may provide an image with improved three-dimensional (3D) effect and immersion and may be implemented as a non-wearable type.

The display apparatus may be applied as a virtual reality (VR) apparatus with less fatigue during use thereof.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a diagram of a configuration of a display apparatus according to embodiments of the disclosure;
FIG. 2 is a flowchart of a display method according to embodiments of the disclosure;
FIG. 3 is a diagram of a configuration of a display apparatus and an optical path in which images with different senses of depth are transmitted to a user according to embodiments of the disclosure;
FIGS. 4A and 4B are diagrams of optical paths according to time-sequential driving of a polarization controller provided in a display apparatus according to embodiments of the disclosure;
FIGS. 5A and 5B are diagrams of images formed at depth positions by the optical paths shown in FIGS. 4A and 4B, respectively, according to embodiments of the disclosure;
FIG. 6 is a diagram of a configuration of a display apparatus and an optical path in which images with different senses of depth are transmitted to a user according to embodiments of the disclosure;
FIG. 7 is a diagram of a process in which image light is polarization-controlled by being spatially divided based on binary depth map information in the display apparatus according to a comparative example not covered by the subject-matter of the claims.
FIGS. 8A and 8B show optical paths of light respectively coming from two pixels according to embodiments of the disclosure;
FIG. 9 is a diagram of a display apparatus spatially dividing image light for each pixel to form images at different depth positions according to embodiments of the disclosure;
FIG. 10 is a diagram of an image recognized by a user by an action according to embodiments of the disclosure;
FIG. 11 is a diagram of a configuration of a display apparatus and an optical path in which images with different senses of depth are transmitted to a user according to embodiments of the disclosure;
FIG. 12 is a diagram of a process in which image light is polarization-controlled by being spatially divided based on gradient depth map information in a display apparatus according to embodiments of the disclosure;
FIGS. 13A, 13B, 13C and 13D respectively show paths of lights respectively coming from four pixels according to embodiments of the disclosure;
FIG. 14 is a diagram of light emitted from each pixel of image light being divided to form images at different depth positions by actions according to embodiments of the disclosure;
FIG. 15 is a diagram of an image recognized by a user by an action according to embodiments of the disclosure; and
FIG. 16 is a diagram of a configuration of a display apparatus and an optical path in which images with different senses of depth are transmitted to a user according to embodiments of the disclosure.

### MODE OF DISCLOSURE

Throughout the disclosure, the expression "at least one of a, b or c" indicates only a, only b, only c, both a and b, both a and c, both b and c, or all of a, b, and c.

Hereinafter, embodiments of the disclosure will be described in detail with reference to the attached drawings to allow those of ordinary skill in the art to easily carry out the embodiments of the disclosure. However, the disclosure may be implemented in various forms, and are not limited to the embodiments of the disclosure described herein. To clearly describe the disclosure, parts that are not associated with the description have been omitted from the drawings, and throughout the specification, identical reference numerals refer to identical parts.

Throughout the specification, when any portion is "connected" to another portion, it may include not only a case where they are "directly connected", but also a case where they are "electrically connected" with another element therebetween. When a portion is referred to as "comprises" a component, the portion may not exclude another component but may further include another component unless stated otherwise.

The term used herein such as "unit", etc., indicates a unit for processing at least one function or operation, and may be implemented in hardware, software, or in a combination of hardware and software.

Although terms used in embodiments of the disclosure are selected with general terms popularly used at present under the consideration of functions in the disclosure, the terms may vary according to the intention of those of ordinary skill in the art, judicial precedents, or introduction of new technology. In addition, in a specific case, the applicant voluntarily may select terms, and in this case, the meaning of the terms may be disclosed in a corresponding description part of an embodiment of the disclosure. Thus, the terms used in herein should be defined not by the simple names of the terms but by the meaning of the terms and the contents throughout the disclosure.

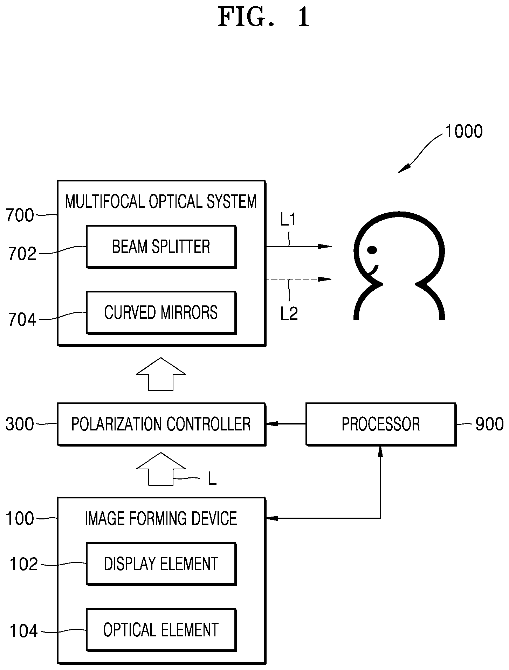

FIG. 1 is a diagram of a configuration of a display apparatus according to embodiments of the disclosure.

Referring to FIG. 1, a display apparatus 1000 may include an image forming device 100 that provides (e.g., generates, modulates, emits, etc.) image light L, a polarization controller 300 that controls polarization of the image light L, a multifocal optical system 700 that focuses the image light L to different focal lengths based on polarization, and a processor 900 that controls the image forming device 100 and the polarization controller 300.

The display apparatus 1000 may divide (e.g., by the multifocal optical system 700) the image light L to be provided to the user into two image lights L1 and L2 having different senses of and transmit the image lights L1 and L2 to a user's field of view. With the two image lights L1 and L2 having different senses of depth simultaneously provided to the user, the user may experience a virtual world with improved immersion, realism, and three-dimensional (3D) effect. Moreover, the display apparatus 1000 may be implemented as a non-wearable type and thus make it possible to watch an image for a long time without any inconvenience caused by wearing the display apparatus 1000.

The image forming device 100 may form and output image light including an image to be provided to the user. The image forming device 100 may include a display element 102 that modulates light based on image information to be provided to the user to form image light and one or more optical element 104 that outputs the image light formed by the display element 102 to a specific position.

A type of an image formed by the display element 102 included in the image forming device 100 may not be specially limited, and may be, for example, a two-dimensional (2D) or 3D image. The 3D image may include, for example, a stereo image, a hologram image, a light-field image, or an integral photography (IP) image, and may also include a multi-view or super multi-view image.

The display element 102 may include, for example, a liquid crystal on silicon (LCoS) element, a liquid crystal display (LCD) element, an organic light-emitting diode (OLED) display element, and a digital micromirror device (DMD), and may also include a next-generation display element such as a micro LED, a quantum dot (QD) LED, etc. When the display element 102 included in the image forming device 100 is a non-light-emitting element such as an LCD, the display element 102 may further include a light source for providing light for forming an image.

The image forming device 100 may include a path switch member, a lens, etc., as an optical element 104 that transmits the image light L formed by the display element to a certain position. For example, the optical element 104 may include, but is not limited to, a beam splitter for changing a path of the image light L, a relay lens for enlarging and reducing the image light L, a spatial filter for removing noise, etc., and use known various optical systems.

The polarization controller 300 may be a phase retarder that delays a phase of incident light and outputs the light in different polarization states. The polarization controller 300 may be electrically controlled and may operate to delay or maintain the phase of the incident light. That is, the polarization controller 300 may be controlled to maintain and output the polarization state of the incident light or change and output the polarization state of the incident light. The polarization controller 300 may be a liquid crystal-based element. For example, the polarization controller 300 may include a liquid crystal layer and an electrode arranged on and under the liquid crystal layer, and depending on an applied voltage, the arrangement of liquid crystal molecules constituting the liquid crystal layer changes, changing the polarization of the incident light.

The processor 900 may control the polarization controller 300. The processor 900 may transmit a polarization control signal to the polarization controller 300. The polarization control signal may be an electric signal that is applied to the polarization controller 300 such that a polarization of the image light L time-sequentially enters a first polarization state and a second polarization state. Alternatively, the polarization control signal may be an electric signal applied to the polarization controller 300 to control the polarization of the image light L to be the first polarization state, the second polarization state, or an arbitrary polarization state having an angle between a first polarization and a second polarization based on image information included in the image light L, e.g., depth information.

The processor 900 may manage overall control over the display apparatus 1000, and control the image forming device 100. The processor 900 may control the display element 102 included in the image forming device 100 to modulate light appropriately for image information to be formed. The image information referred to for control of the polarization controller 300 (e.g., the depth information) may be formed by the processor 900. That is, contents forming an image of each frame, luminance distribution, etc., may be considered to generate depth information for each pixel, and the polarization controller 300 may be controlled based on the depth information. However, this is merely an example, and the depth information used for control of the polarization controller 300 may be generated by another processor and included in image light.

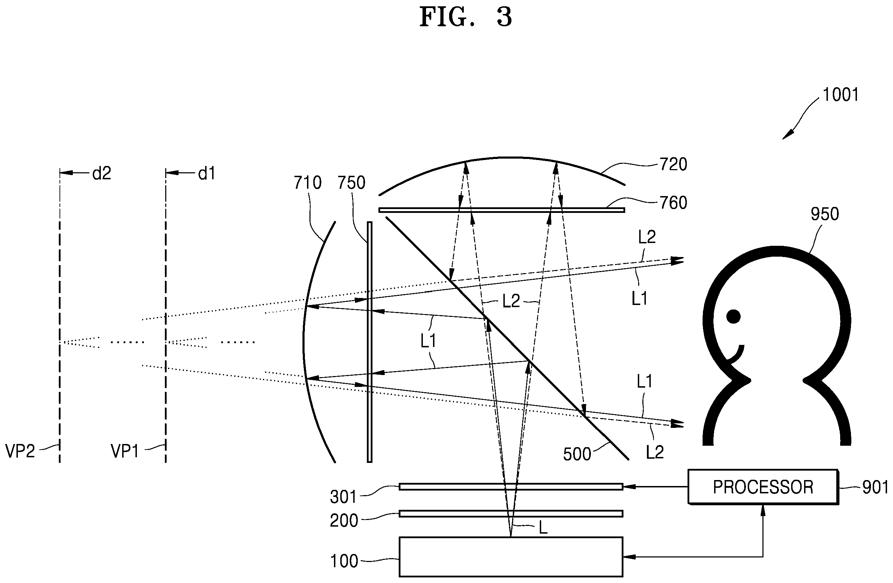

The multifocal optical system 700 may focus image light incident after being polarization-controlled (e.g., by the polarization controller 300) to different focal lengths depending on a polarization state of the image light. For example, the light of the first polarization state may be focused to a first focal length and the light of the second polarization state may be focused to a second focal length, such that the user may recognize two image lights (i.e., the first image light L1 and the second image light L2) having different senses of depth coming from virtual planes at different depth positions. The multifocal optical system 700 may include a beam splitter 702 and a plurality of curved mirrors 704 having positions and shapes that are set to have different focal lengths, and various exemplary structures will be described later in detail with reference to FIG. 3.

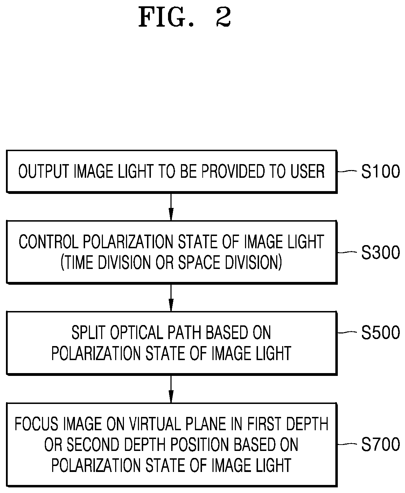

FIG. 2 is a flowchart of a display method according to embodiments of the disclosure.

Referring to FIG. 2, a display method may include operation S100 of outputting image light to be provided to a user, operation S300 of controlling a polarization state of the image light, operation S500 of splitting an optical path based on the polarization state of the image light, and operation S700 of focusing an image on virtual planes at positions of a first depth and a second depth based on the polarization state of the image light.

In operation S300 of controlling the polarization state of the image light, a time-division scheme or a space-division scheme may be used.

The time-division scheme may be a scheme in which the entire image light of one frame is time-sequentially controlled, by dividing a timing, to be in the first polarization state and the second polarization state. The image light may be controlled, for example, in the first polarization state at t1, and may be controlled in the second polarization state at t2 having elapsed by a certain amount of time Δt from t1. Light of a first polarization and light of a second polarization may be split into different optical paths and pass through different focusing members, thus being focused on virtual planes with different depth positions. The time interval may be shorter than an interval that may be recognized by the user. Thus, the user may simultaneously recognize images of two timings (i.e., two images having different senses of depth) in which lights with different polarization states are transmitted to the user's field of view through different paths.

The spatial-division scheme is a scheme in which image light of one frame is controlled spatially (e.g., in the unit of a pixel) and a polarization state of the image light is controlled. A part of the image light may be controlled in the first polarization state and another part of the image light may be controlled in the second polarization state, such that the light of the first polarization and the light of the second polarization may be split into different optical paths and pass through different focusing members, thus being focused on virtual planes at different depth positions. A part of image light is controlled in a polarization state having an angle between the first polarization and the second polarization, and in this case, an optical path is split at a ratio of a first polarization component to a second polarization component, according to the angle. In the spatial-division scheme, the gradient depth information is used. In a comparative example not covered by the subject-matter of the claims, binary depth map information may be used. The image light having a polarization state controlled for each pixel may be simultaneously transmitted to the user through different paths based on the polarization state. Thus, the user may recognize two images having different senses of depth at the same time.

In the split optical path, a focusing member for focusing light at different depth positions may be arranged, such that lights having different polarization states may be focused at different depth positions. For example, the light of the first polarization may be focused on a virtual plane at a first depth position, and the light of the second polarization may be focused on a virtual plane at a second depth position.

Various embodiments of the disclosure for implementing the above-described display apparatus and method will be described.

FIG. 3 is a diagram of a configuration of a display apparatus and an optical path in which images with different senses of depth are transmitted to a user according to embodiments of the disclosure.

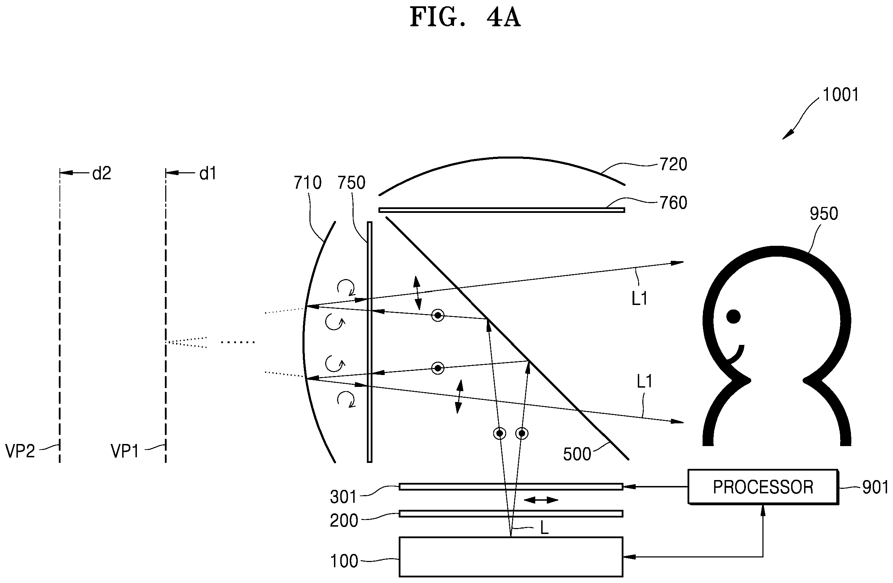

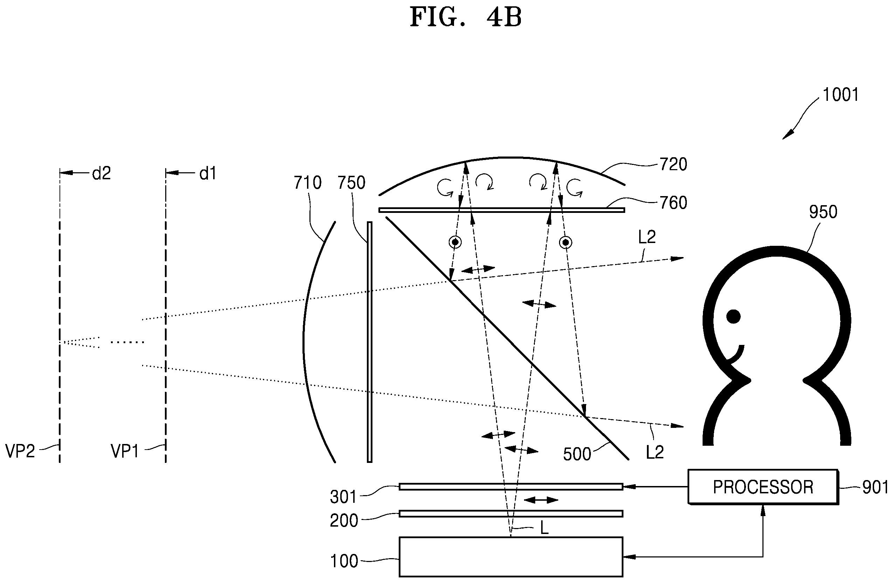

FIGS. FIGS. 4A and 4B are diagrams of optical paths according to time-sequential driving of a polarization controller provided in a display apparatus according to embodiments of the disclosure.

Referring to FIG. 3, a display apparatus 1001 may include the image forming device 100 that provides the image light L, a polarization controller 301 that adjusts a polarization state of the image light L provided by the image forming device 100, a polarization beam splitter 500 that is arranged on an optical path in which the image light L that is polarization-controlled by the polarization controller 301 travels, where the polarization beam splitter 500 reflects light of the first polarization and transmits light of the second polarization that is different from the first polarization, a first curved mirror 710 that is arranged in the optical path of the first image light L1 reflected by the polarization beam splitter 500 among the image light L and that focuses the first image light L1 on a virtual plane VP1 at a first depth d1 position, a second curved mirror 720 that is arranged in the optical path of the second image light L2 transmitted through the polarization beam splitter 500 and that focuses the second image light L2 on a virtual plane VP2 at a second depth d2 position, and a processor 901 that controls the polarization controller 301 to time-sequentially adjust the polarization state of the image light.

The image forming device 100 may include a display element that forms image light L and an optical element that transmits the image light L to a certain position, and may include known various display elements and optical configurations as described with reference to FIG. 1.

The polarization beam splitter 500 may reflect the light of the first polarization and transmit the light of the second polarization perpendicular to the first polarization. The first polarization and the second polarization, which are linear polarization, may be respectively S polarization and P polarization. The first polarization may be expressed as a polarization angle of 90°, and the second polarization may be expressed as a polarization angle of 0°. While the following description will be based on such criteria, this is merely relative and definitions of the first polarization and the second polarization may be exchanged with each other. In the drawings, the first polarization will be indicated by ⊙ and the second polarization will be indicated by ↔.

A polarizer 200 may be arranged between the image forming device 100 and the polarization controller 301. The polarizer 200 may have a polarization axis parallel to any one of the first polarization and the second polarization split from the polarization beam splitter 500. That is, the polarizer 200 may convert a polarized light of incident light into the first polarization state or the second polarization state. Hereinbelow, it will be described that the polarizer 200 changes a polarization direction of the incident light to 0° (i.e., the polarization state of the incident light into the second polarization state), but the disclosure is not limited thereto and the polarizer 200 may change the polarized light of the incident light into the first polarization state.

When the image light L coming from the image forming device 100 has already been linearly polarized in one direction, the polarizer 200 may not be separately included. Alternatively, the polarizer 200 may be included in the image forming device 100.

Shapes of the first curved mirror 710 and the second curved mirror 720 may be set to have a refractive power for forming virtual focal planes at different depth positions. For example, the first curved mirror 710 and the second curved mirror 720 may be positioned at the same distance in different directions from the polarization beam splitter 500, and curved shapes thereof may be different from each other. However, without being limited thereto, in an embodiment of the disclosure, the first curved mirror 710 and the second curved mirror 720 have the same curved shape and distances thereof from the polarization beam splitter 500 may be set different, or the first curved mirror 710 and the second curved mirror 720 may have different curved shapes and distances thereof from the polarization beam splitter 500 may be set different.

The first curved mirror 710 and the second curved mirror 720 may have different focal lengths. The first curved mirror 710 may form the virtual plane VP1 that is a virtual focal plane at the first depth d1 position, and the second curved mirror 720 may form the virtual plane VP2 that is a virtual focal plane at the second depth d2 position. Although the virtual planes VP1 and VP2 are shown in the form of a flat surface, these are merely examples and may have the form of a curved surface based on a parameter that defines curved surfaces of the first curved mirror 710 and the second curved mirror 720. While the second depth d2 is expressed as being greater than the first depth d1, this is merely an example such that the focal lengths of the first curved mirror 710 and the second curved mirror 720 and the relative arrangement positions of the first curved mirror 710 and the second curved mirror 720 may be exchanged with each other.

The first curved mirror 710 and the second curved mirror 720 may have an aspheric shape. By adjusting an aspherical surface function defining an aspherical surface and aspherical surface coefficients used in the aspherical surface function, an aspherical surface having a desired focal length may be set. The first curved mirror 710 and the second curved mirror 720 may have an ellipsoid shape. However, without being limited thereto, various aspheric shapes may be applied to each of the first curved mirror 710 and the second curved mirror 720.

A 1/4-wavelength plate 750 may be arranged between the first curved mirror 710 and the polarization beam splitter 500. The 1/4-wavelength plate 750 is a phase retarder that delays the phase of incident light by 45°, whereby a linearly polarized light may be converted into a circularly polarized light and a circularly polarized light may be converted into a linearly polarized light.

A 1/4-wavelength plate 760 may be arranged between the second curved mirror 720 and the polarization beam splitter 500, and may convert the polarization state of the incident light between linear polarization and circular polarization.

Both the 1/4-wavelength plate 750 and the 1/4-wavelength plate 760 are shown in the form of a flat plate, but they are merely examples and may have the form of a curved surface. For example, the 1/4-wavelength plate 750 may have a curved surface that is similar to or the same as the first curved mirror 710, and the 1/4-wavelength plate 760 may have a curved surface that is similar to or the same as the second curved mirror 720. The 1/4-wavelength plate 750 and the 1/4-wavelength plate 760 may have the same curved surface shape.

The processor 901 may control the polarization controller 301 such that the polarization state of the image light L is changed in a time-division manner. That is, the polarization controller 301 may be controlled such that the entire image light L of one frame is time-sequentially changed into the first polarization state and the second polarization state in two timings.

The polarization controller 301 may be a liquid crystal-based element. The polarization controller 301 may include a liquid crystal layer and electrodes arranged on and under the liquid crystal layer. In the display apparatus 1001 according to an embodiment of the disclosure, the polarization controller 301 may control polarization of the entire image light L of one frame, such that the liquid crystal layer of the polarization controller 301 may not be divided into a plurality of cells controlled for each region. However, the polarization controller used in the display apparatus divided into the plurality of cells according to an embodiment of the disclosure may be applied to the display apparatus 1001 such that driving for controlling the plurality of cells in the same mode is possible.

Among the image light L coming from the image forming device 100, light reflected from the polarization beam splitter 500 and transmitted to the user 950 via the first curved mirror 710 will be expressed as the first image light L1 and light passing through the polarization beam splitter 500 and transmitted to the user 950 via the second curved mirror 720 will be expressed as the second image light L2.

FIG. 4A shows an optical path in which the first image light L1 recognized as coming from the virtual plane VP1 at the first depth d1 at the time t1 is transmitted to the user 950. Referring to FIG. 4A, the polarization controller 301 may be controlled in a mode where polarization of the image light L passing through the polarizer 200 having the second polarization state is changed into the first polarization state for output. Thus, the image light L may be incident to the polarization beam splitter 500 in the first polarization state, such that the first image light L1 reflected from the polarization beam splitter 500 may be directed to the first curved mirror 710. The first image light L1 in the first polarization state reflected from the polarization beam splitter 500 may have a circular polarization (e.g., right-handed circular polarization) state by passing through the 1/4-wavelength plate 750, and may have a circular polarization (e.g., left-circular polarization) state in the opposite direction by being reflected from the first curved mirror 710. The first image light L1 in the circular polarization state passes through the 1/4-wavelength plate 750 and thus become light in the second polarization state that may pass through the polarization beam splitter 500. That is, the first image light L1 via the first curved mirror 710 may be directed toward the user's 950 field of view by passing through the polarization beam splitter 500. The first image light L1 may be recognized to the user 950 as light coming from the virtual plane VP1 at the first depth d1 position by a refractive power action of the first curved mirror 710.

FIG. 4B shows an optical path in which the second image light L2 recognized as coming from the virtual plane VP2 at the second depth d2 at the time t2 is transmitted to the user 950. At the time t2 that is different from t1, the polarization controller 301 may be controlled in a mode where the image light L entering the second polarization state after passing through the polarizer 200 is output without polarization conversion (i.e., while maintaining the second polarization state). Thus, the image light L may be incident to the polarization beam splitter 500 in the second polarization state, such that the image light L may be directed to the second curved mirror 720 after passing through the polarization beam splitter 500. The second image light L2 in the second polarization state passing through the polarization beam splitter 500 may have a circular polarization (e.g., left-handed circular polarization) state by passing through the 1/4-wavelength plate 760, and may have a circular polarization (e.g., right-handed circular polarization) state in the opposite direction by being reflected from the second curved mirror 720. The second image light L2 in the circular polarization state passes through the 1/4-wavelength plate 760 and thus has the first polarization state that may be reflected from the polarization beam splitter 500. That is, the second image light L2 via the second curved mirror 720 may be directed toward the user's 950 field of view by being reflected from the polarization beam splitter 500. The second image light L2 may be recognized to the user 950 as light coming from the virtual plane VP2 at the position of the second depth d2 by a refractive power action of the second curved mirror 720.

A time difference Δt between t1 and t2 at which operations of FIGS. 4A and 4B are time-sequentially driven may be a short time that is not recognized by a human eye. Hence, the user 950 may not recognize that the image light L1 of one frame is transmitted divided as the first image light L1 and the second image light L2. That is, the user 950 may recognize that the second image L2 coming from the second depth d2 position at the time t1 and the first image light L1 coming from the first depth d1 position at the time t2 are recognized as simultaneous.

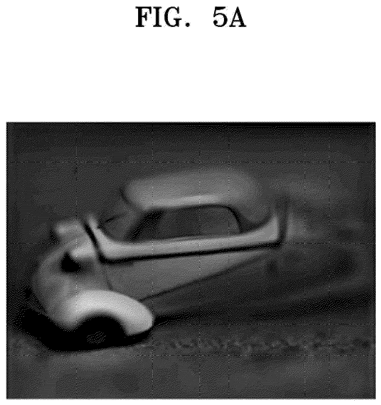

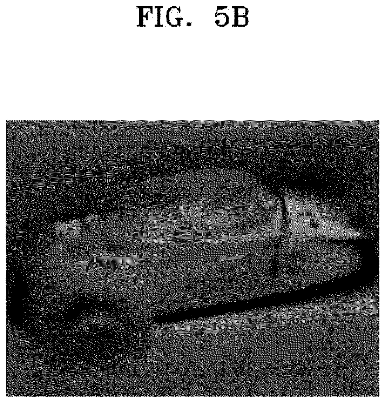

FIGS. 5A and 5B are diagrams of images formed at depth positions by the optical paths shown in FIGS. 4A and 4B, respectively, according to embodiments of the disclosure.

FIG. 5A shows an image formed on the virtual plane VP1 at the first depth d1 position, and FIG. 5B shows an image formed on the virtual plane VP2 at the second depth d2 position. The user may simultaneously recognize such two images, and thus may watch an image with improved 3D effect and immersion.

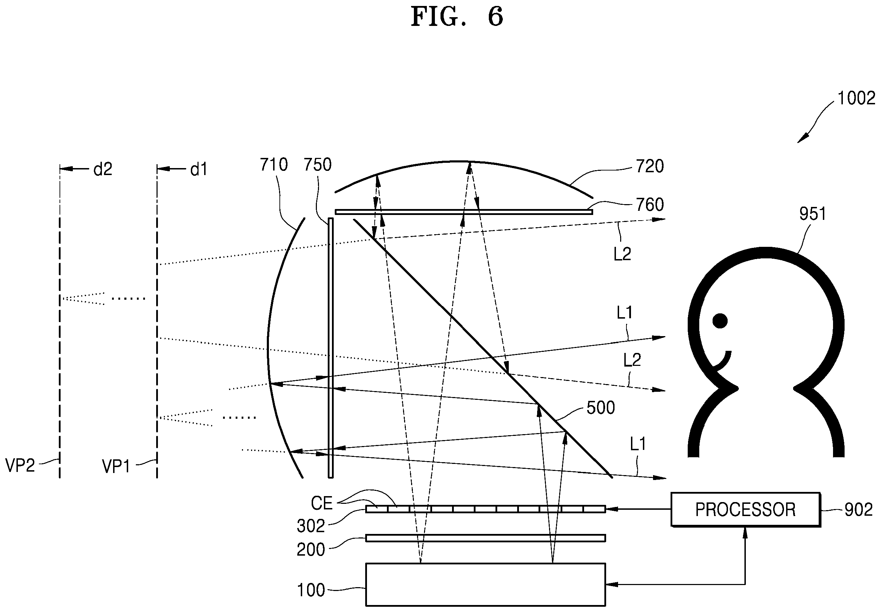

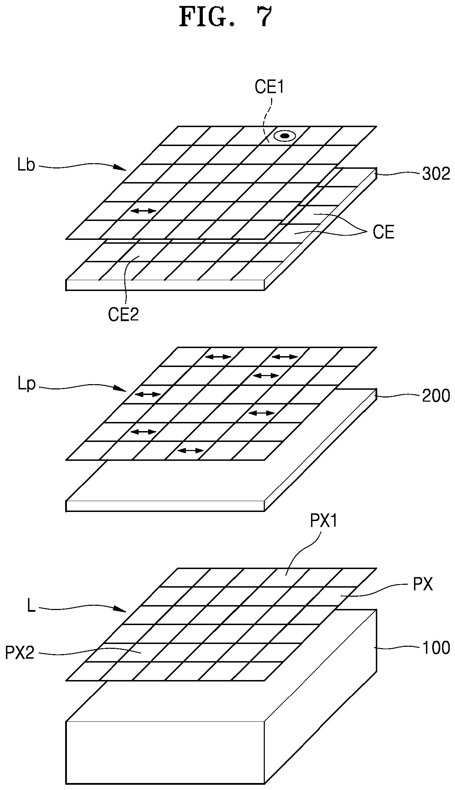

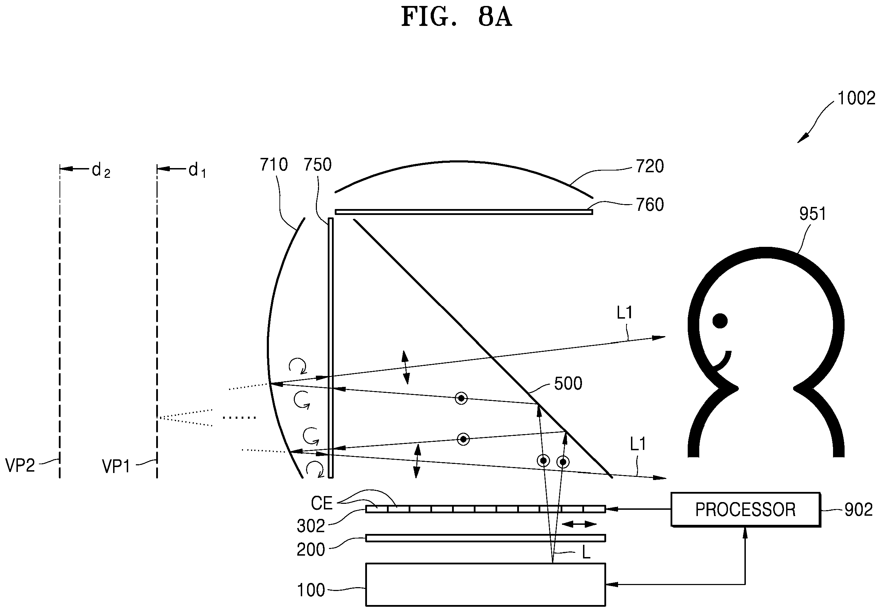

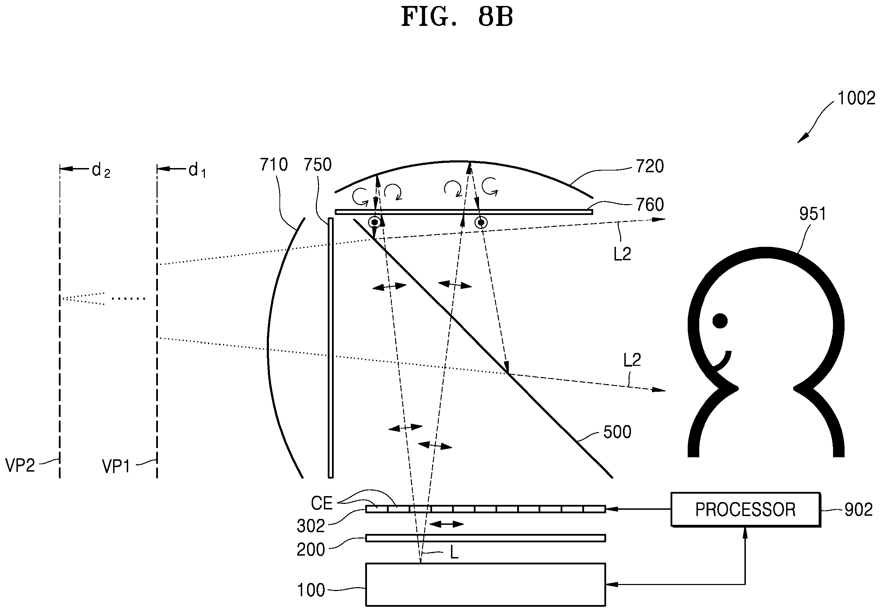

FIG. 6 is a diagram of a configuration of a display apparatus and an optical path in which images with different senses of depth are transmitted to a user according to embodiments of the disclosure. FIG. 7 is a diagram of a process in which image light is polarization-controlled by being spatially divided based on binary depth map information in the display apparatus according to a comparative example not covered by the subject-matter of the claims. FIGS. 8A and 8B show optical paths of light respectively coming from two pixels according to embodiments of the disclosure.

A display apparatus 1002 according to a comparative example not covered by the subject-matter of the claims, is different from the above-described display apparatus 1001 in that a polarization controller 302 includes a plurality of cells CE independently adjusting polarization of the incident light and a processor 902 controls each of the plurality of cells included in the polarization controller 302 based on binary depth map information included in the image light L.

Unlike the display apparatus 1001 described with reference to FIGS. 3 to 5B where the polarization state of the image light L is controlled in a time-division manner, the display apparatus 1002 according to an embodiment of the disclosure may control the polarization state by spatially dividing the image light L. To this end, the polarization controller 302 may include the plurality of cells separately controlled to control the polarization state for each position of the image light L. The processor 902 may control the polarization controller 302 such that the image light L is polarization-controlled based on the binary depth map information.

The binary depth map information is information in which depth information for each pixel of the image light L is allocated between two values that may be, for example, values corresponding to the first depth d1 and the second depth d2. The first depth d1 value may be allocated to some pixels of the image light L1, and the second depth d2 value may be allocated to other pixels. The polarization controller 302 may control light from a pixel allocated with the first depth d1 value to be in the first polarization state so as to have an optical path focused on the virtual plane VP1 at the first depth d1 position, and control light from a pixel allocated with the second depth d2 value to be in the second polarization state so as to have an optical path focused on the virtual plane VP2 at the second depth d2 position. That is, some cells CE of the polarization controller 302 may change the second polarization state of the incident light into the first polarization and some cells C may maintain the second polarization state of the incident light. Thus, the two image lights L1 and L2 having different senses of depth may be provided to the user 951. This process will be described in more detail below.

FIG. 7 shows a process of changing the polarization state of the image light L, which is spatially divided and polarization-controlled, in a beam cross section. After passing through the polarizer 200, the image light L coming from the image forming device 100 may be incident on the polarization controller 302 as light Lp of second polarization as a whole. in a comparative example not covered by the subject-matter of the claims, the plurality of cells CE of the polarization controller 302 may be respectively controlled based on the binary depth map information. For example, when the polarization controller 302 is a liquid crystal-based modulator, a voltage applied to an electrode included in each of the plurality of cells CE may be adjusted.

Based on the binary depth map information, the polarization controller 302 may control light allocated with a first depth value (e.g., light from a first pixel PX1) to be in the first polarization state, and control light allocated with a second depth value (e.g., light from a second pixel PX2) to be in the second polarization state. That is, a first cell CE1 corresponding to the first pixel PX1 of the polarization controller 302 may change the polarization state of the incident light from the second polarization to the first polarization, and a second cell CE2 corresponding to the second pixel PX2 may not change the polarization state of the incident light. As such, light Lb that is polarization-controlled based on the binary depth map information while passing through the polarization controller 302 may have the first polarization state at a corresponding position in the first pixel PX1 allocated with the first depth value and the second polarization state at a corresponding position in the second pixel PX2 allocated with the second depth value.

While it is shown in FIG. 7 that pixels PX of the image light L and cells CE of the polarization controller 302 have a one-to-one correspondence, this is merely an example and the disclosure is not limited thereto. For example, the size or number of cells CE is variable in a range in which the incident light may be controlled in a polarization state corresponding to the binary depth map information added to the image light L.

FIG. 8A shows an optical path from a pixel allocated with the first depth d1 value. Referring to FIG. 8A, in a comparative example not covered by the subject-matter of the claims, the polarization controller 302 may be controlled to change light of a pixel allocated with the first depth d1 value based on the binary depth map information among the image light L having the second polarization state as a whole after passing through the polarizer 200 into the first polarization state . The polarization controller 302 may be controller to output the polarization-controlled light. The light polarization-controlled may be directed toward the first curved mirror 710 as the first image light L1 by being reflected from the polarization beam splitter 500. The first image light L1 may have a circular polarization (e.g., right-handed circular polarization) state while passing through the 1/4-wavelength plate 750, and have a circular polarization (e.g., left-handed circular polarization) state in the opposite direction by being reflected from the first curved mirror 710. The first image light L1 may then become light in the second polarization state, which may pass through the polarization beam splitter 500, while passing through the 1/4-wavelength plate 750. That is, the first image light L1 passing through the first curved mirror 710 may be directed toward the user's 951 field of view by passing through the polarization beam splitter 500. The first image light L1 may be recognized to the user 951 as light coming from the virtual plane VP1 at the first depth d1 position by a refractive power action of the first curved mirror 710.

FIG. 8B shows an optical path from a pixel allocated with the second depth d2 value. Referring to FIG. 8B, in a comparative example not covered by the subject-matter of the claims the polarization controller 302 may be controlled to maintain the second polarization state of light of a pixel allocated with the second depth d2 value based on the binary depth map information among the image light L having the second polarization state as a whole after passing through the polarizer 200 and output the polarization-controlled light. The light polarization-controlled may be directed toward the second curved mirror 720 as the second image light L2 by passing through the polarization beam splitter 500. The second image light L2 may have the circular polarization (e.g., left-circular polarization) state while passing through the 1/4-wavelength plate 760, and have the circular polarization (e.g., right-circular polarization) state in the opposite direction by being reflected from the second curved mirror 720, and then have the first polarization state that may be reflected from the polarization beam splitter 500 while passing through the 1/4-wavelength plate 760. As such, the second image light L2 passing through the second curved mirror 720 may be directed toward the user's 951 field of view by being reflected from the polarization beam splitter 500. The second image light L2 may be recognized to the user 951 as light coming from the virtual plane VP2 at the position of the second depth d2 by a refractive power action of the second curved mirror 720.

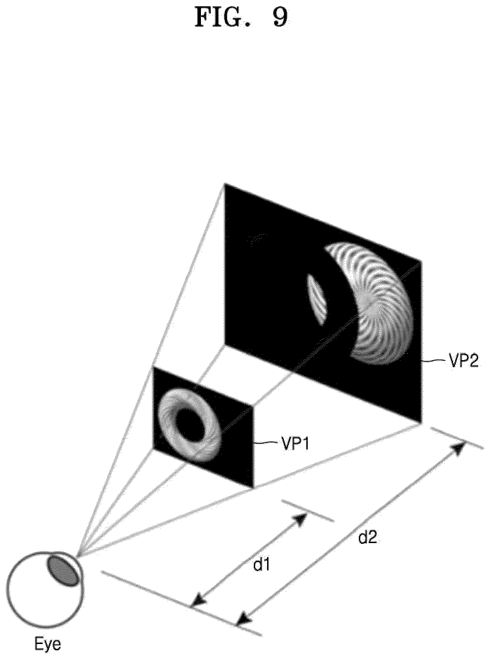

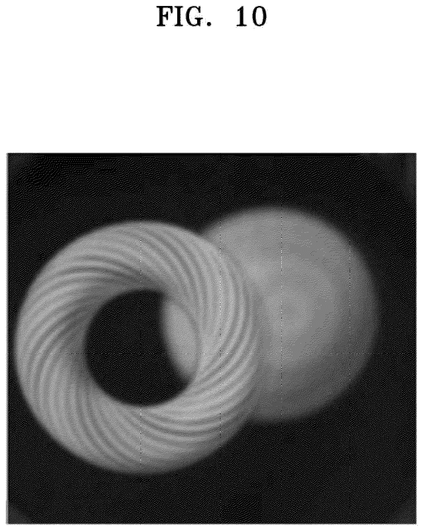

FIG. 9 is a diagram of a display apparatus spatially dividing image light for each pixel to form images at different depth positions according to a comparative example not covered by the subject-matter of the claims FIG. 10 is a diagram of an image recognized by a user by an action according to embodiments of the disclosure.

Referring to FIG. 9, different images polarization-controlled based on the binary depth map information are displayed on the virtual plane VP1 at the first depth d1 position and the virtual plane VP2 at the second depth d2 position. The user perceives the two images at the same time, and thus may perceive, for example, an image as shown in FIG. 10.

Various schemes are provided to allocate two depth values for each pixel in the binary depth map. For example, a luminance of a pixel, a red/green/blue (RGB) ratio of a pixel, a luminance change among pixels, etc., may be utilized, and a weight value may be applied to each of them. In addition, for various image effects other than improvement of a 3D effect, immersion, etc., for example, a luminance and contents of an image, a motion difference from a previous frame image, etc., may be considered.

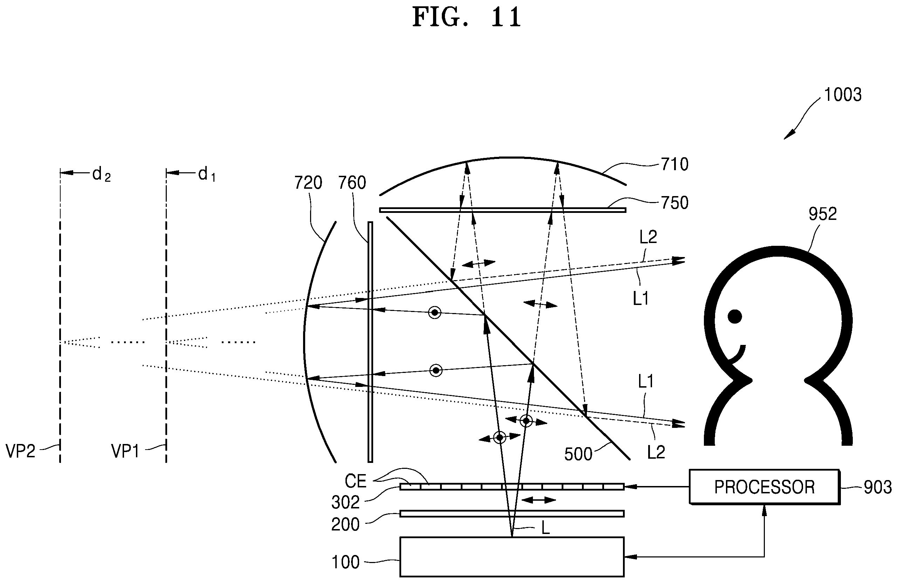

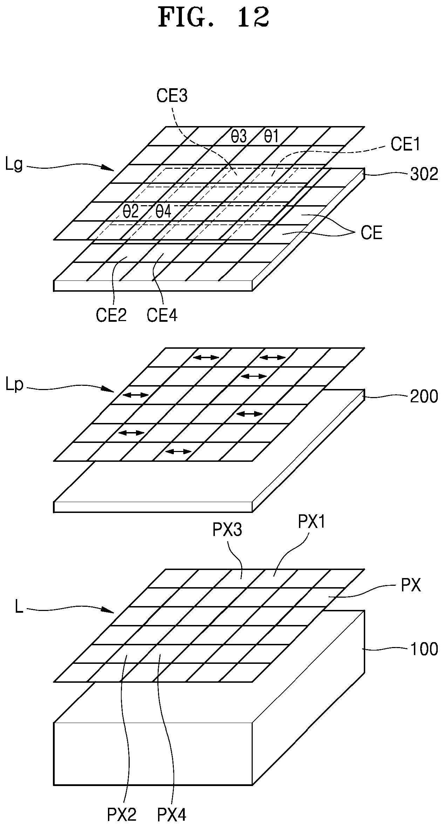

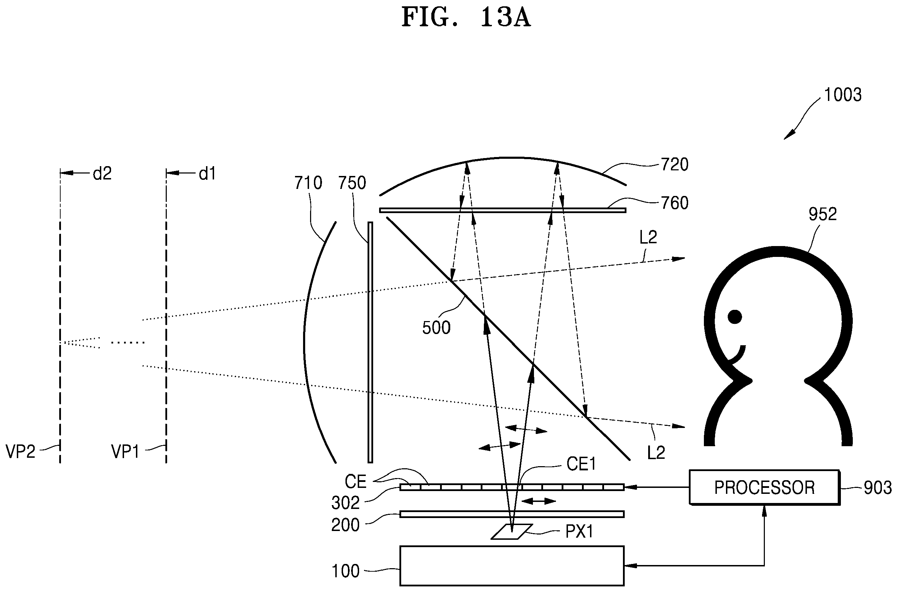

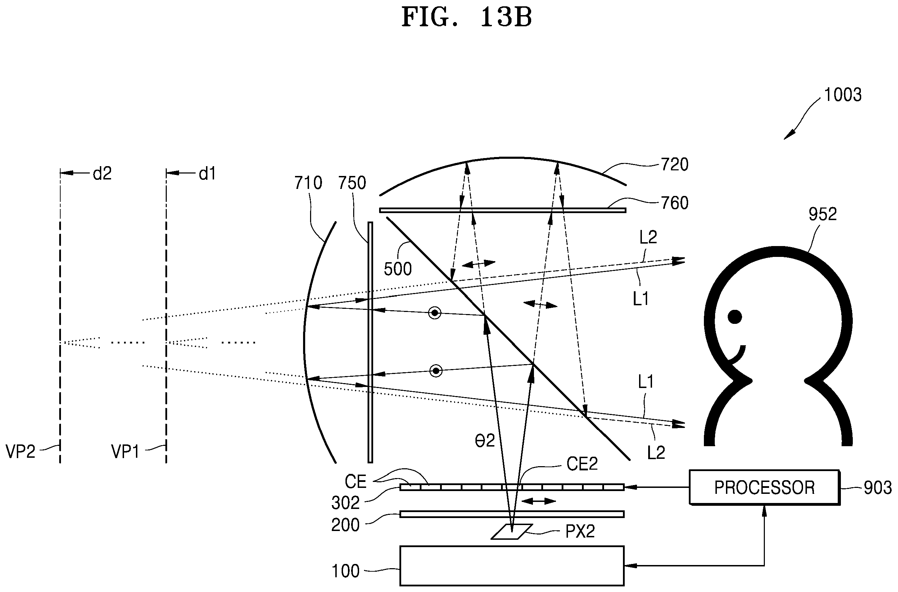

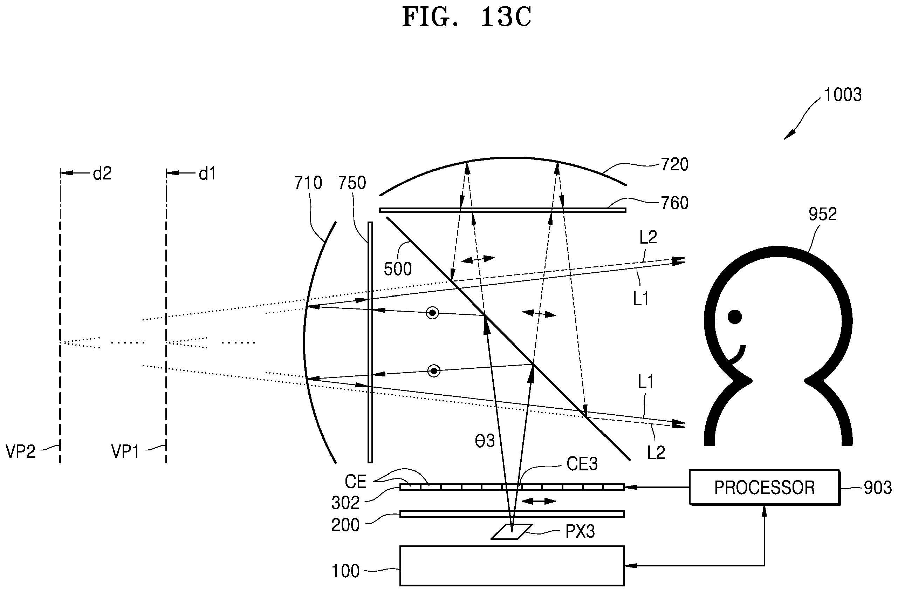

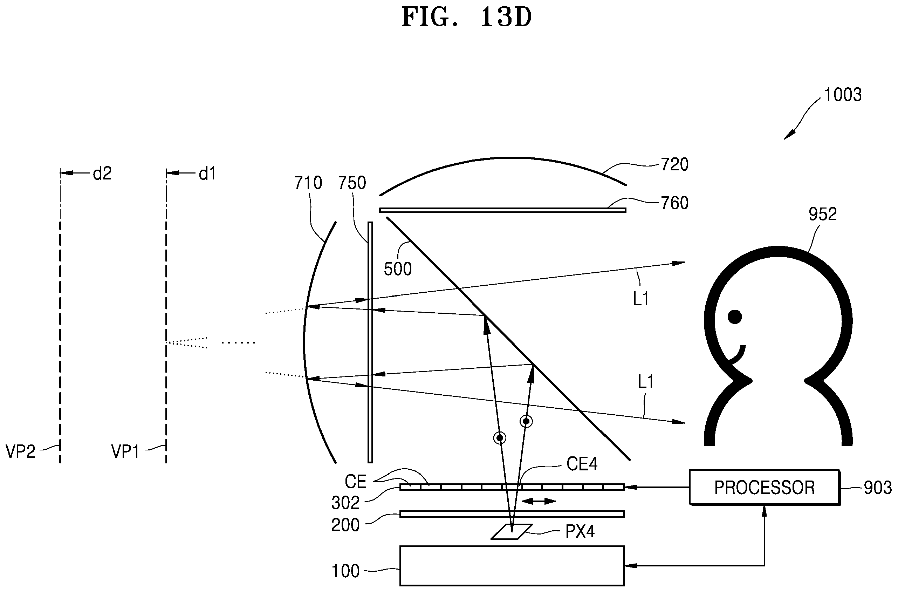

FIG. 11 is a diagram of a configuration of a display apparatus and an optical path in which images with different senses of depth are transmitted to a user according to embodiments of the disclosure. FIG. 12 is a diagram of a process in which image light is polarization-controlled by being spatially divided based on gradient depth map information in a display apparatus according to embodiments of the disclosure. FIGS. 13A, 13B, 13C and 13D respectively show paths of lights respectively coming from four pixels according to embodiments of the disclosure.

A display apparatus 1003 according to an embodiment of the disclosure may be similar to the display apparatus 1002 of FIG. 6 in that the polarization controller 302 includes the plurality of cells CE independently adjusting polarization of incident light, and may be different from the display apparatus 1002 of FIG. 6 in that a processor 903 controls each of the plurality of cells CE included in the polarization controller 302 based on gradient depth map information included in the image light L.

That is, the display apparatus 1003 according to an embodiment of the disclosure may be similar to the display apparatus 1002 of FIG. 6 with respect to controlling the polarization state of the image light L by spatially dividing the image light L, and may be different from the display apparatus 1002 of FIG. 6 in that the polarization controller 302 controls the polarization state of the image light L based on the gradient depth map information rather than the binary depth map information.

The gradient depth map information is information in which depth information for each pixel of the image light L is more subdivided than binary depth map information. A depth value gd used in the gradient depth map information may be, for example, a value between the first depth d1 and the second depth d2. The depth value gd may be in a range of d1 ≤ gd ≤ d2. The depth value gd used in the gradient depth map information may be an arbitrary value in the range or a plurality of values predefined in the range.

Various schemes are provided to allocate various depth values between the first depth d1 and the second depth d2 for each pixel in the gradient depth map. For example, a luminance of a pixel, a color (an RGB ratio) of a pixel, a luminance difference from an adjacent pixel, a luminance change, etc., may be utilized, and a weight value may be applied to each of them. For example, the first depth d1 value may be allocated to a pixel that is brightest, has a dominant R value, G value, or B value due to the largest RGB ratio difference, or has the largest luminance change among a plurality of pixels or to a pixel corresponding to the largest function value obtained by multiplying each of those items by a weight value and summing multiplication results. The second depth value d2 value may be allocated to a pixel that is darkest, has little difference in RGB ratio due to the smallest RGB ratio difference, or has the smallest luminance change or to a pixel corresponding to the smallest function value obtained by multiplying each of those items by a weight value and summing multiplication results. However, this is merely an example and the disclosure is not limited thereto. The depth values gd used in the gradient depth map information may be set variously considering, for example, a luminance and contents of an image, a motion difference from a previous frame image, etc., for various image effects other than improvement of a 3D effect and immersion, etc.

The polarization controller 302 may change polarization of light from a pixel to an angle appropriate for the same, based on a depth value allocated for each pixel. The polarization angle may be expressed as a combination of the first polarization component and the second polarization component. For example the first polarization ⊙ may be expressed as a polarization angle of 90°, the second polarization ↔ may be expressed as a polarization angle of 0°, and a polarization component for each polarization angle may be expressed based on them. Based on the depth value gd allocated to a pixel of the image light L, the polarization controller 302 may be controlled such that light from the pixel has a polarization angle appropriate for the set depth value gd. The polarization state at a position corresponding to each pixel of the image light L passing through the polarization controller 302 is a polarization state including the first polarization ⊙ and the second polarization ↔at a certain ratio (e.g., a predetermined ratio), in which a path of the light may be split in the polarization beam splitter 500 according to the ratio. A part of the light incident to the polarization beam splitter 500 may be transmitted as the first image light L1 reflected from the polarization beam splitter 500 and focused on the virtual plane VP1 of the first depth d1, and another part of the incident light may be transmitted as the second image light L2 passing through the polarization beam splitter 500 and focused on the virtual plane VP2 of the second depth d2, to the user's 952 field of view. This process will be described in more detail below.

FIG. 12 shows the polarization state of the image light L, which is spatially divided and polarization- controlled, in a beam cross section. After passing through the polarizer 200, the image light L coming from the image forming device 100 may be incident on the polarization controller 302 as light Lp of second polarization as a whole.

The plurality of cells CE of the polarization controller 302 may be respectively controlled based on the gradient depth map information. The polarization controller 302 may control light from each of first to fourth pixels PX1, PX2, PX3, and PX4, allocated with a certain depth value, to be in a polarization state of a polarization angle corresponding to the depth value. As shown in FIG. 12, the first cell CE1 of the polarization controller 302 may control the incident light to be in a polarization state of a polarization angle θ1, and the second cell CE2, a third cell CE3, and a fourth cell CE4 may control the incident light to be in polarization states of polarization angles θ2, θ3, and θ4, respectively. As such, light Lg of a polarization distribution controlled based on the gradient depth map information while passing through the polarization controller 302 may have the polarization states of the polarization angles θ1 to θ4 at positions corresponding to the first pixel PX1 to the fourth pixel PX4. This polarization state may be expressed by combining the first polarization ⊙ defined as an angle of 90 degrees with the second polarization ↔ defined as an angle of 0 at a certain ratio.

While it is shown in FIG. 12 that the pixels PX of the image light L and the cells CE of the polarization controller 302 one-to-one correspond to each other, this is merely an example and the disclosure is not limited thereto. For example, the size or number of cells CE is variable in a range in which the incident light may be controlled in a polarization state corresponding to the gradient depth map information added to the image light L.

FIGS. 13A to 13D show paths of lights respectively coming from the first to fourth pixels PX1, PX2, PX3, and PX4 of FIG. 12, allocated with different depth values.

FIG. 13A shows a case where θ1 is 0 degree, that is, light from the first pixel PX1 may be controlled to be in the second polarization state while passing through the first cell CE1 of the polarization controller 302. The light from the first pixel PX1 may pass through the polarization beam splitter 500 and pass through the 1/4 wavelength plate 750, the second curved mirror 720, and the 1/4 wavelength plate 750 in that order, and then may be reflected from the polarization beam splitter 500 and transmitted to the user 952 (i.e., as the second image light L2 focused on the virtual plane VP2 at the second depth d2 position).

FIG. 13B shows a case where θ2 is an angle between 0 degree and 90 degrees in which the light from the second pixel PX2 may enter the polarization state including the first polarization ⊙ and the second polarization ↔ at a certain ratio while passing through the second cell CE2 of the polarization controller 302. For example, a polarization state corresponding to a case where θ2 is 30 degrees may include the second polarization ↔ component defined as 0 degree and the first polarization ⊙ component defined as 90 degrees at a ratio of about 6.6:3.3. Thus, a path of the light in the polarization state where the polarization angle is 30 degrees may be split at the ratio in the polarization beam splitter 500, and thus the light may be transmitted as the first image light L1 and the second image light L2 having different senses of depth to the user 952's field of view. For example, when a luminance of the second pixel PX2, i.e., a pixel value is 128, values focused on the virtual plane VP2 and the virtual plane VP1 in a divided manner may be about 85.3 and 42.6, respectively. The first image light L1 may be reflected by the polarization beam splitter 500, pass through the 1/4-wavelength plate 750, the first curved mirror 710, and the 1/4-wavelength plate 750 in that order, and then be directed toward the user's 952 field of view by passing through the polarization beam splitter 500, and the second image light L2 may pass through the polarization beam splitter 500, pass through the 1/4-wavelength plate 760, the second curved mirror 720, and the 1/4-wavelength plate 760 in that order, and then be directed toward the user's 952 field of view by being reflected from the polarization beam splitter 500.

FIG. 13C shows a case where θ3 is an angle between 0 degree and 90 degrees and is different from θ2 in which the light from the second pixel PX3 may enter the polarization state including the first polarization ⊙ and the second polarization ↔ at a certain ratio while passing through the third cell CE3 of the polarization controller 302. For example, a polarization state corresponding to a case where θ2 is 60 degrees may include the second polarization ↔ component defined as 0 degree and the first polarization ⊙ component defined as 90 degrees at a ratio of about 3.3:6.6. Thus, the path may be split at the ratio in the polarization beam splitter 500, and thus the light may be transmitted to the user 952's field of view by passing through the second curved mirror 720 and the first curved mirror 710, respectively. For example, when a luminance of the second pixel PX2 (i.e., a pixel value) is 128, the values focused on the virtual plane VP2 and the virtual plane VP1 in a divided manner may be about 42.6 and 85.3, respectively.

FIG. 13D shows a case where θ4 is 90 degrees. That is, light from the fourth pixel PX4 may be controlled to be in the first polarization state while passing through the fourth cell CE4 of the polarization controller 302. The light from the fourth pixel PX4 may be transmitted to the user 952 as the first image light L1 which passes through the polarization beam splitter 500 and is focused on the virtual plane VP1 at the first depth d1 position via the first curved mirror 710.

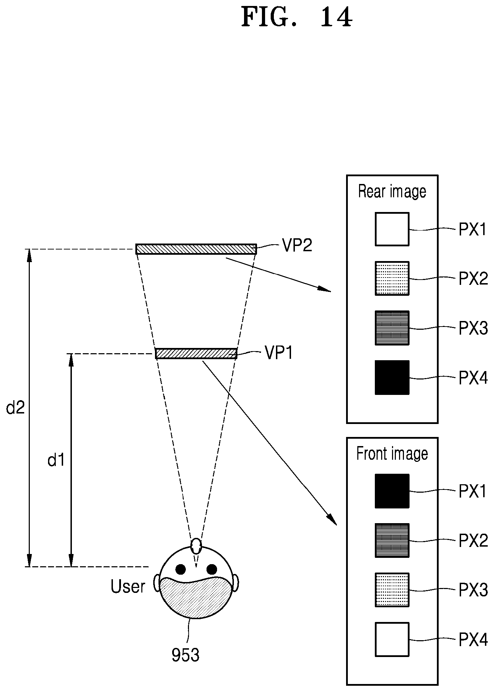

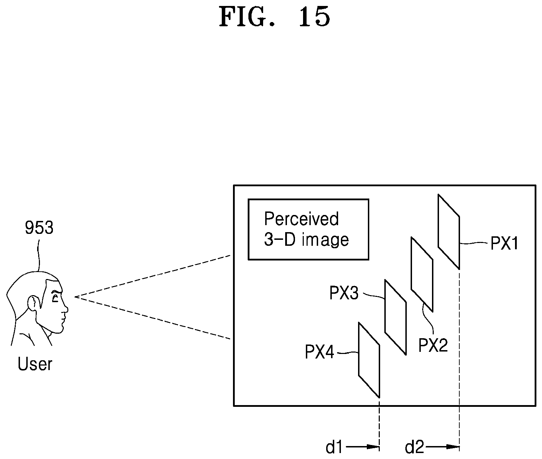

FIG. 14 is a diagram of light emitted from each pixel of image light being divided to form images at different depth positions by actions according to embodiments of the disclosure. FIG. 15 is a diagram of an image recognized by a user by an action according to embodiments of the disclosure.

Lights from the first to fourth pixels PX1, PX2, PX3, and PX4 controlled with polarization angles of 0 degree, 30 degrees, 60 degrees, and 90 degrees, respectively, may contribute to a front image and a rear image at different ratios by being focused on the virtual plane VP1 at the first depth d1 position and the virtual plane VP2 at the second depth d2 position in a divided manner. The light from the first pixel PX1 may contribute to the rear image as a whole, the light from the second pixel PX2 may contribute to the rear image and the front image at about 33.3 % and about 66.7 %, respectively, the light from the third pixel PX3 may contribute to the rear image and the front image at about 66.7 % and 33.3 %, respectively, and the light from the fourth pixel PX4 may contribute to the front image as a whole.

Referring to FIG. 15, the user 953 may recognize an image focused on the rear image and the front image as shown in FIG. 14 as an image including various senses of depth between the first depth d1 and the second depth d2. That is, polarization control and optical path splitting as described with reference to FIGS. 13A to 13D may be described as controlling the polarization of the image light based on the gradient depth map information so that the image is perceived by the user with a sense of depth as shown in FIG. 15.

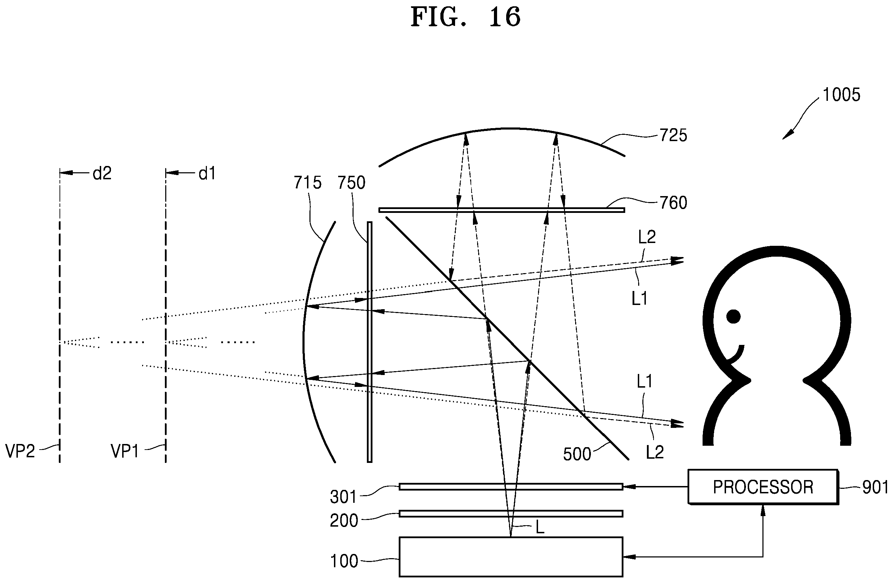

FIG. 16 is a diagram of a configuration of a display apparatus and an optical path in which images with different senses of depth are transmitted to a user according to embodiments of the disclosure.

A display apparatus 1005 according to an embodiment may be the same as the above-described embodiments in that a first curved mirror 715 and a second curved mirror 725 focus image light split from the polarization beam splitter 500 on the virtual planes VP1 and VP2 at different depth positions.

The first curved mirror 715 and the second curved mirror 725 may have the same curved shapes and have different distances from the polarization beam splitter 500, thus forming the two virtual planes VP1 and VP2 having different depths.

While FIG. 16 shows a modified example where a distance between the second curved mirror 720 and the polarization beam splitter 500 is longer in the display apparatus 1001 of FIG. 3, the disclosure is not limited thereto. Such a modification may be applied not only to FIG. 3, but also the display apparatuses 1002 and 1003 of FIGS. 6 and 11. That is, a display apparatus 1005 according to an embodiment of the disclosure may control polarization of image light using the space-division scheme or the time-division scheme using the gradient depth map information, thereby providing the image lights L1 and L2 having different depths to the user. In a comparative example not covered by the subject-matter of the claims, binary depth map information may be used.

The above-described display apparatuses 1000, 1001, 1002, 1003 and 1005 may be polarization-controlled appropriately for a desired image effect, thereby providing image light having a plurality of senses of depth, and may be implemented as a non-wearable type, thereby improving user convenience. However, the disclosure is not limited thereto, and the display apparatuses 1000, 1001, 1002, 1003 and 1005 may also be implemented as a wearable type such as a glasses type, a head mount type, etc.

In the above-described display apparatuses 1000, 1001, 1002, 1003 and 1005, a case where the polarization of the image light is time-division controlled and a case where the polarization of the image light is space-division controlled are described as different embodiments of the disclosure, but such driving may also be applied together to one embodiment of the disclosure. For example, for a desired image effect, an image of some frames may form an image of a plurality of senses of depth by time-divisionally controlling polarization of image light, and an image of some other frames may form an image of a plurality of senses of depth by space-divisionally controlling polarization of the image light. Alternatively, an image of some frames may be polarization-controlled based on the gradient depth map information, thereby forming an image of a plurality of senses of In a comparative example not covered by the subject-matter of the claims the polarization control may be based on a binary depth map.

The above-described display apparatuses 1000, 1001, 1002, 1003 and 1005 may be applied to various fields. For example, they may be used in combination with general display devices, televisions (TVs), monitors, etc., and may be applied to various products such as mobile devices, automobiles, heads-up displays, augmented/virtual reality devices, large signage, wearable displays, rollable TVs, stretchable displays, and so forth.

Those of ordinary skill in the art to which the disclosure pertains will appreciate that the disclosure may be implemented in different detailed ways without departing from the scope of protection, which is defined by the appended claims. Accordingly, the aforementioned embodiments of the disclosure should be construed as being only illustrative, but should not be constructed as being restrictive from all aspects. For example, each element described as a single type may be implemented in a distributed manner, and likewise, elements described as being distributed may be implemented as a coupled type.

While the foregoing display apparatus and method have been shown and described in connection with the embodiments to help understanding of the disclosure, it will be apparent to those of ordinary skill in the art that modifications and variations may be made. Therefore, the disclosed embodiments should be considered in a descriptive sense rather than a restrictive sense.

## Claims

1. A display apparatus (1003) comprising:
an image forming device (100) configured to provide image light (L);
a polarization controller (302) configured to adjust a polarization state of the image light (L) provided from the image forming device (100);
a processor (903) configured to control the polarization controller (302), based on image information to be provided to a user;
a polarization beam splitter (500) provided in a first optical path where the image light (L) travels, the polarization beam splitter (500) being configured to:
reflect light of a first polarization; and
transmit light of a second polarization that is different from the first polarization;
a first curved mirror (710) provided in a second optical path of first image light (L1) among the image light (L) reflected from the polarization beam splitter (500), the first curved mirror (710) being configured to focus the first image light (L1) on a first virtual plane (VP1) at a first depth position; and
a second curved mirror (720) provided in a third optical path of second image light (L2) among the image light (L) passing through the polarization beam splitter (500), the second curved mirror (720) being configured to focus the second image light (L2) on a second virtual plane (VP2) at a second depth position;
**characterized in that**
wherein the polarization controller (302) comprises a plurality of cells (CE) configured to independently adjust a polarization of incident light;
the image information comprises gradient depth map information in which a depth value (gd) in a range from a first depth value (d1) to a second depth value (d2) is allocated to each of a plurality of pixels of the image light (L), and
the processor (903) is further configured to control the polarization controller (302) such that light from each of the plurality of pixels of the image light (L) enters a polarization state having a ratio of a first polarization component to a second polarization component.

2. The display apparatus (1003) of claim 1, wherein the processor (903) is further configured to control the polarization controller (302) to time-divisionally adjust the polarization state of the image light (L) into the first polarization and the second polarization.

3. The display apparatus (1003) of claim 1, wherein, in a gradient depth map, the depth value (gd) of each of the plurality of pixels of the image light (L) is determined based on at least one of a luminance of a pixel, a color of a pixel, or a luminance difference from an adjacent pixel.

4. The display apparatus (1003) of claim 1, further comprising a polarizer (200) provided between the image forming device (100) and the polarization controller (302), the polarizer (200) being configured to convert polarization of the image light (L) provided from the image forming device (100) into a linear polarization of a predetermined direction.

5. The display apparatus (1003) of claim 1, further comprising a 1/4-wavelength plate (750) provided between the polarization beam splitter (500) and the first curved mirror (710).

6. The display apparatus (1003) of claim 1, further comprising a 1/4-wavelength plate (720) provided between the polarization beam splitter (500) and the second curved mirror (720).

7. The display apparatus (1003) of claim 1, wherein the first curved mirror (710) has an aspheric surface in a first shape, and
wherein the second curved mirror (720) has an aspheric surface in a second shape that is different from the first shape.

8. The display apparatus of claim 1, wherein the first curved mirror (710) and the second curved mirror (720) have a same curved shape, and
wherein the first curved mirror (710) and the second curved mirror (720) are provided at different distances from the polarization beam splitter (500).

9. The display apparatus (1003) of claim 1, wherein the display apparatus (1003) comprises a non-wearable type of display apparatus.

10. A display method comprising:
outputting image light (L), the image light (L) to be provided to a field of view of a user (952);
adjusting a polarization state of the image light (L);
based on the polarization state of the image light (L), focusing the image light (L) on at least one of a first virtual plane (VP1) having a first depth position and a second virtual plane (VP2) having a second depth position;
**characterized by** the method further comprising
adjusting the polarization state includes separately adjusting the polarization state of the image light in a unit of a pixel of the image light (L); and
the polarization state of the image light being adjusted for each pixel corresponding to the image light based on gradient depth map information, to a polarization state where a first polarization component and a second polarization component are included at a predetermined ratio.

11. The display method of claim 10, further comprising splitting a traveling path of the image light (L) into two different directions based on the adjusted polarization state of the image light (L).

## Patentansprüche

1. Anzeigeeinrichtung (1003), umfassend:
eine Bilderzeugungsvorrichtung (100), die dazu konfiguriert ist, Bildlicht (L) bereitzustellen;
eine Polarisationssteuerung (302), die dazu konfiguriert ist, einen Polarisationszustand des von der Bilderzeugungsvorrichtung (100) bereitgestellten Bildlichts (L) einzustellen;
einen Prozessor (903), der dazu konfiguriert ist, die Polarisationssteuerung (302) basierend auf Bildinformationen, die einem Benutzer bereitzustellen sind, zu steuern;
einen Polarisationsstrahlteiler (500), der in einem ersten optischen Pfad bereitgestellt ist, in dem sich das Bildlicht (L) bewegt, wobei der Polarisationsstrahlteiler (500) zu Folgendem konfiguriert ist:
Reflektieren von Licht einer ersten Polarisation; und
Übertragen von Licht einer zweiten Polarisation, die sich von der ersten Polarisation unterscheidet;
einen ersten gekrümmten Spiegel (710), der in einem zweiten optischen Pfad eines ersten Bildlichts (L1) unter dem von dem Polarisationsstrahlteiler (500) reflektierten Bildlicht (L) bereitgestellt ist, wobei der erste gekrümmte Spiegel (710) dazu konfiguriert ist, das erste Bildlicht (L1) auf eine erste virtuelle Ebene (VP1) an einer ersten Tiefenposition zu fokussieren; und
einen zweiten gekrümmten Spiegel (720), der in einem dritten optischen Pfad eines zweiten Bildlichts (L2) unter dem durch den Polarisationsstrahlteiler (500) hindurchtretenden Bildlicht (L) bereitgestellt ist, wobei der zweite gekrümmte Spiegel (720) dazu konfiguriert ist, das zweite Bildlicht (L2) auf eine zweite virtuelle Ebene (VP2) an einer zweiten Tiefenposition zu fokussieren;
**dadurch gekennzeichnet, dass**
wobei die Polarisationssteuerung (302) eine Vielzahl von Zellen (CE) umfasst, die dazu konfiguriert sind, eine Polarisation von einfallendem Licht unabhängig einzustellen;
die Bildinformationen Gradiententiefenkarteninformationen umfassen, in denen ein Tiefenwert (gd) in einem Bereich von einem ersten Tiefenwert (d1) zu einem zweiten Tiefenwert (d2) jedem von einer Vielzahl von Pixeln des Bildlichts (L) zugewiesen ist, und
der Prozessor (903) ferner dazu konfiguriert ist, die Polarisationssteuerung (302) derart zu steuern, dass Licht von jedem der Vielzahl von Pixeln des Bildlichts (L) in einen Polarisationszustand eintritt, der ein Verhältnis einer ersten Polarisationskomponente zu einer zweiten Polarisationskomponente aufweist.

2. Anzeigeeinrichtung (1003) nach Anspruch 1, wobei der Prozessor (903) ferner dazu konfiguriert ist, die Polarisationssteuerung (302) zu steuern, um den Polarisationszustand des Bildlichts (L) zeitlich unterteilt in die erste Polarisation und die zweite Polarisation einzustellen.

3. Anzeigeeinrichtung (1003) nach Anspruch 1, wobei in einer Gradiententiefenkarte der Tiefenwert (gd) jedes der Vielzahl von Pixeln des Bildlichts (L) basierend auf mindestens einer von einer Leuchtdichte eines Pixels, einer Farbe eines Pixels oder einer Leuchtdichtedifferenz zu einem benachbarten Pixel bestimmt wird.

4. Anzeigeeinrichtung (1003) nach Anspruch 1, ferner umfassend einen Polarisator (200), der zwischen der Bilderzeugungsvorrichtung (100) und der Polarisationssteuerung (302) bereitgestellt ist, wobei der Polarisator (200) dazu konfiguriert ist, eine Polarisation des von der Bilderzeugungsvorrichtung (100) bereitgestellten Bildlichts (L) in eine lineare Polarisation einer vorbestimmten Richtung umzuwandeln.

5. Anzeigeeinrichtung (1003) nach Anspruch 1, ferner umfassend eine 1/4-Wellenlängenplatte (750), die zwischen dem Polarisationsstrahlteiler (500) und dem ersten gekrümmten Spiegel (710) bereitgestellt ist.

6. Anzeigeeinrichtung (1003) nach Anspruch 1, ferner umfassend eine 1/4-Wellenlängenplatte (720), die zwischen dem Polarisationsstrahlteiler (500) und dem zweiten gekrümmten Spiegel (720) bereitgestellt ist.

7. Anzeigeeinrichtung (1003) nach Anspruch 1, wobei der erste gekrümmte Spiegel (710) eine asphärische Oberfläche in einer ersten Form aufweist und
wobei der zweite gekrümmte Spiegel (720) eine asphärische Oberfläche in einer zweiten Form aufweist, die sich von der ersten Form unterscheidet.

8. Anzeigeeinrichtung nach Anspruch 1, wobei der erste gekrümmte Spiegel (710) und der zweite gekrümmte Spiegel (720) eine gleiche gekrümmte Form aufweisen und
wobei der erste gekrümmte Spiegel (710) und der zweite gekrümmte Spiegel (720) in unterschiedlichen Entfernungen von dem Polarisationsstrahlteiler (500) bereitgestellt sind.

9. Anzeigeeinrichtung (1003) nach Anspruch 1, wobei die Anzeigeeinrichtung (1003) eine nicht tragbare Art von Anzeigeeinrichtung umfasst.

10. Anzeigeverfahren, umfassend:
Ausgeben von Bildlicht (L), wobei das Bildlicht (L) an einem Sichtfeld eines Benutzers (952) bereitzustellen ist;
Einstellen eines Polarisationszustands des Bildlichts (L);
Fokussieren des Bildlichts (L), basierend auf dem Polarisationszustand des Bildlichts (L), auf mindestens eine von einer ersten virtuellen Ebene (VP1), die eine erste Tiefenposition aufweist, und einer zweiten virtuellen Ebene (VP2), die eine zweite Tiefenposition aufweist;
**dadurch gekennzeichnet, dass** das Verfahren ferner umfasst, dass
das Einstellen des Polarisationszustands getrenntes Einstellen des Polarisationszustands des Bildlichts in einer Einheit eines Pixels des Bildlichts (L) beinhaltet; und
der Polarisationszustand des Bildlichts für jedes dem Bildlicht entsprechende Pixel basierend auf Gradiententiefenkarteninformationen auf einen Polarisationszustand eingestellt wird, bei dem eine erste Polarisationskomponente und eine zweite Polarisationskomponente in einem vorbestimmten Verhältnis beinhaltet sind.

11. Anzeigeverfahren nach Anspruch 10, ferner umfassend Aufteilen eines Bewegungspfads des Bildlichts (L) in zwei unterschiedliche Richtungen basierend auf dem eingestellten Polarisationszustand des Bildlichts (L).

## Revendications

1. Appareil d'affichage (1003) comprenant :
un dispositif de formation d'image (100) configuré pour fournir une lumière d'image (L) ;
un contrôleur de polarisation (302) configuré pour ajuster un état de polarisation de la lumière d'image (L) fournie par le dispositif de formation d'image (100) ;
un processeur (903) configuré pour commander le contrôleur de polarisation (302), sur la base d'informations d'image à fournir à un utilisateur ;
un diviseur de faisceau de polarisation (500) prévu sur un premier chemin optique parcouru par la lumière d'image (L), le diviseur de faisceau de polarisation (500) étant configuré pour :
réfléchir la lumière d'une première polarisation ; et
transmettre la lumière d'une deuxième polarisation qui est différente de la première polarisation ;
un premier miroir courbe (710) prévu sur un deuxième chemin optique de première lumière d'image (L1) parmi la lumière d'image (L) réfléchie par le séparateur de faisceau de polarisation (500), le premier miroir courbe (710) étant configuré pour focaliser la première lumière d'image (L1) sur un premier plan virtuel (VP1) à une première position de profondeur ; et
un second miroir courbe (720) prévu sur un troisième chemin optique de deuxième lumière d'image (L2) parmi la lumière d'image (L) traversant le diviseur de faisceau de polarisation (500), le second miroir courbe (720) étant configuré pour focaliser la deuxième lumière d'image (L2) sur un deuxième plan virtuel (VP2) à une deuxième position de profondeur ;
**caractérisé en ce que**
dans lequel le contrôleur de polarisation (302) comprend une pluralité de cellules (CE) configurées pour ajuster indépendamment une polarisation de la lumière incidente ;
les informations d'image comprennent des informations de carte de profondeur à gradient dans lesquelles une valeur de profondeur (gd) comprise dans une plage allant d'une première valeur de profondeur (d1) à une seconde valeur de profondeur (d2) est attribuée à chacun d'une pluralité de pixels de la lumière d'image (L), et
le processeur (903) est en outre configuré pour commander le contrôleur de polarisation (302) de telle sorte que la lumière provenant de chacun de la pluralité de pixels de la lumière d'image (L) entre dans un état de polarisation déterminé entre un rapport d'une première composante de polarisation et une seconde composante de polarisation.

2. Appareil d'affichage (1003) selon la revendication 1, dans lequel le processeur (903) est en outre configuré pour commander au contrôleur de polarisation (302) d'ajuster, par multiplexage temporel, l'état de polarisation de la lumière d'image (L) entre la première polarisation et la seconde polarisation.

3. Appareil d'affichage (1003) selon la revendication 1, dans lequel, dans une carte de profondeur à gradient, la valeur de profondeur (gd) de chacun de la pluralité de pixels de la lumière d'image (L) est déterminée sur la base d'au moins l'une d'une luminance d'un pixel, d'une couleur d'un pixel ou d'une différence de luminance par rapport à un pixel adjacent.

4. Appareil d'affichage (1003) selon la revendication 1, comprenant en outre un polariseur (200) prévu entre le dispositif de formation d'image (100) et le contrôleur de polarisation (302), le polariseur (200) étant configuré pour convertir la polarisation de la lumière d'image (L) fournie par le dispositif de formation d'image (100) en une polarisation linéaire d'une direction prédéterminée.

5. Appareil d'affichage (1003) selon la revendication 1, comprenant en outre une plaque de 1/4 de longueur d'onde (750) prévue entre le séparateur de faisceau de polarisation (500) et le premier miroir courbe (710).

6. Appareil d'affichage (1003) selon la revendication 1, comprenant en outre une plaque de 1/4 de longueur d'onde (720) prévue entre le séparateur de faisceau de polarisation (500) et le second miroir courbe (720).

7. Appareil d'affichage (1003) selon la revendication 1, dans lequel le premier miroir courbe (710) a une surface asphérique dans une première forme, et
dans lequel le second miroir courbe (720) a une surface asphérique dans une deuxième forme qui est différente de la première forme.

8. Appareil d'affichage selon la revendication 1, dans lequel le premier miroir courbe (710) et le second miroir courbe (720) ont une même forme courbe, et
dans lequel le premier miroir courbe (710) et le second miroir courbe (720) sont prévus à des distances différentes du séparateur de faisceau de polarisation (500).

9. Appareil d'affichage (1003) selon la revendication 1, dans lequel l'appareil d'affichage (1003) comprend un appareil d'affichage de type non portable.

10. Procédé d'affichage comprenant :
l'émission d'une lumière d'image (L), la lumière d'image (L) devant être fournie à un champ de vision d'un utilisateur (952) ;
l'ajustement d'un état de polarisation de la lumière d'image (L) ;
sur la base de l'état de polarisation de la lumière d'image (L), la focalisation de la lumière d'image (L) sur au moins l'un d'un premier plan virtuel (VP1) ayant une première position de profondeur et d'un deuxième plan virtuel (VP2) ayant une deuxième position de profondeur ;
**caractérisé par** le procédé comprenant en outre :
l'ajustement de l'état de polarisation comprend l'ajustement séparé de l'état de polarisation de la lumière d'image dans une unité d'un pixel de la lumière d'image (L) ; et
l'état de polarisation de la lumière d'image étant ajusté pour chaque pixel correspondant à la lumière d'image sur la base d'informations de carte de profondeur à gradient, à un état de polarisation dans lequel une première composante de polarisation et une seconde composante de polarisation sont incluses selon un rapport prédéterminé.

11. Procédé d'affichage selon la revendication 10, comprenant en outre la division d'un trajet de déplacement de la lumière d'image (L) en deux directions différentes sur la base de l'état de polarisation ajusté de la lumière d'image (L).
